# DEMANDE DE BREVET EUROPEEN

(11) **EP 2 740 561 A1**
(43) Date de publication de la demande: **11.06.2014**
(21) Numéro de dépôt: 13181470.9
(22) Date de dépôt: 23.08.2013
(51) Int. Cl.: B23K 20/12

(54) **Système amélioré de soudage par friction malaxage comprenant un contre-appui mobile**

(30) Priorité: 07.09.2012 FR 1258393
(71) Demandeur: Airbus Operations (Société par actions simplifiée), 31060 Toulouse (FR)
(72) Inventeur: Mialhe, Christophe, 81500 Giroussens (FR); Lieven, Patrick, 31620 Fronton (FR); Delahaye, Romain, 31770 Colomiers (FR)
(74) Mandataire: Augarde, Eric

(57) **Abrégé**

Système (46) de soudage par friction malaxage de deux pièces (22, 24), comprenant une unité de soudage (48) comprenant au moins une tête de soudage (54a, 54b) pourvue d'un pion rotatif (66a, 66b), et une unité de contre-appui (50) présentant une surface d'appui (80) pour supporter les pièces (22, 24) à l'encontre d'une pression exercée par la tête de soudage, et dans lequel chaque tête de soudage (54a, 54b) est déplaçable par rapport à la surface d'appui (80) selon une première direction (57) parallèle à un axe de rotation (68a, 68b) du pion rotatif (66a, 66b) et selon une deuxième direction (56) orthogonale à l'axe de rotation (68a, 68b), et la surface d'appui (80) est déplaçable selon la deuxième direction (56) et est formée par deux galets presseurs (62) coaxiaux écartés l'un de l'autre.

## Description

### DOMAINE TECHNIQUE

La présente invention concerne un système et un procédé pour l'assemblage de deux pièces par la technique du soudage par friction malaxage (FSW).

L'invention trouve notamment une application dans la fixation des raidisseurs sur des panneaux d'aéronefs, notamment d'avions.

Les panneaux concernés par l'invention peuvent être des panneaux de fuselage, de voilure, ou d'empennage, ou encore des panneaux faisant partie d'un réservoir ou d'une case de train, ou tout autre type de panneau.

Les raidisseurs fixés sur ces panneaux peuvent notamment être des cadres circonférentiels de fuselage, des lisses ou raidisseurs longitudinaux de fuselage, des longerons ou des nervures de voilure ou d'empennage, des traverses de plancher ou des rails de plancher, etc.

### ÉTAT DE LA TECHNIQUE ANTÉRIEURE

La technique dite de soudage par friction malaxage, également dénommée *FSW* (de l'anglais *Friction Stir Welding*)*,* est connue pour permettre de manière générale une réalisation rapide d'une jonction mécanique durable qui permet un passage d'efforts entre les pièces assemblées avec une efficacité au moins équivalente à celle obtenue au moyen d'une jonction conventionnelle par rivetage.

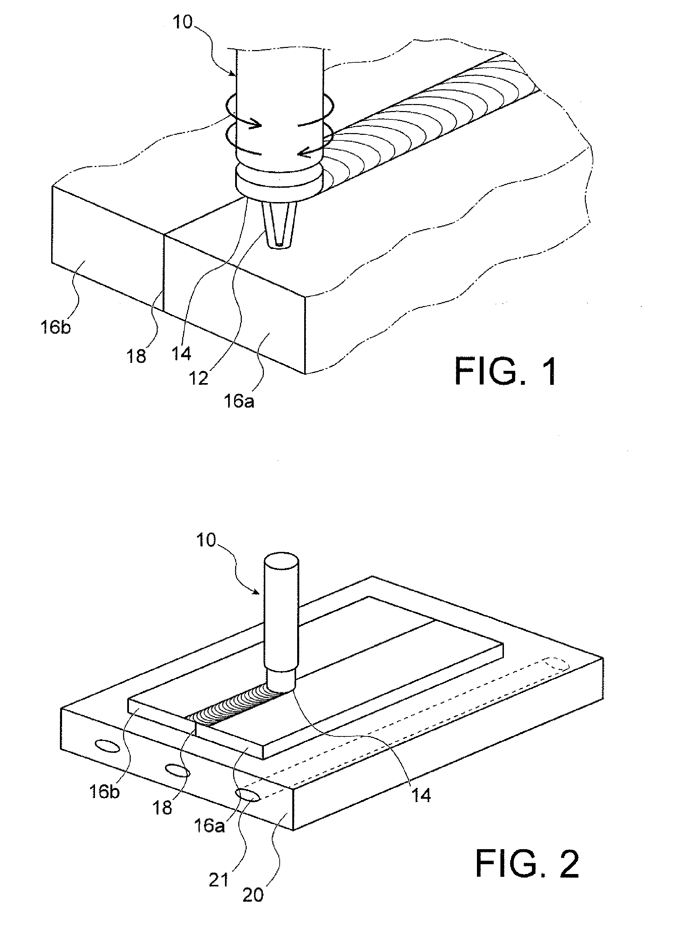

Cette technique, illustrée schématiquement sur la figure 1, fait appel à un dispositif de soudage comportant au moins une tête de soudage 10, comportant un pion rotatif 12 et un épaulement 14 s'étendant à la base du pion rotatif 12 et présentant un diamètre typiquement égal à 2 à 2.5 fois le diamètre moyen de ce pion rotatif 12.

Le soudage par friction malaxage de deux pièces 16a, 16b consiste en l'introduction du pion rotatif 12 dans les deux pièces au niveau de l'interface de jonction 18 entre celles-ci jusqu'à ce que l'épaulement 14 soit mis en contact avec la surface de chacune des pièces 16a, 16b. Cette introduction du pion rotatif 12 dans la matière constituant les pièces 16a, 16b est rendu possible par un ramollissement local de cette matière du fait d'un échauffement produit par la friction du pion rotatif 12 contre les deux pièces 16a et 16b. L'état pâteux de la matière des pièces 16a, 16b autour du pion rotatif 12 autorise alors un déplacement de ce pion rotatif 12 le long de l'interface de jonction 18. La rotation du pion rotatif 12, ainsi que, le cas échéant, celle de l'épaulement 14, provoquent un malaxage de la matière à l'état pâteux.

L'extrusion induite par le pion rotatif 12 et le forgeage assuré par l'épaulement 14 entraînent ainsi la formation d'un cordon de soudure de proche en proche. Ce cordon de soudure prend la forme d'une nouvelle structure métallurgique commune aux deux matériaux formée grâce à des phénomènes de restauration-recristallisation, et permet ainsi de garantir une bonne cohésion des deux pièces 16a, 16b après refroidissement.

Comme l'illustre schématiquement la figure 2, une contre-pression est appliquée sur la face de chaque pièce 16a, 16b opposée à la tête de soudage 10, au moyen d'une contre-forme 20, afin de contrer la pression exercée par le pion rotatif 12. Une telle contre-forme intègre parfois un dispositif de refroidissement permettant d'évacuer une partie de la chaleur générée par la friction, ce qui permet en général d'améliorer la tenue mécanique des pièces après soudage. Un tel dispositif de refroidissement prend par exemple la forme de canaux 21 intégrés à la contre-forme 20 et dans lesquels circule un fluide caloporteur.

La technique de soudage par friction malaxage permet un soudage dit « bord à bord », tel qu'illustré sur les figures 1 et 2, dans lequel l'axe du pion rotatif 12 est localement parallèle à l'interface de jonction entre les pièces à assembler. Cette technique permet également un soudage dit « par transparence », dans lequel l'axe du pion rotatif 12 est localement orthogonal à l'interface de jonction entre les pièces à assembler. Dans ce cas, l'une des pièces à assembler est interposée entre la tête de soudage et l'autre pièce à assembler.

La technique de soudage par friction malaxage présente notamment l'avantage d'être conduite en dessous de la température de fusion de la matière constituant les pièces à assembler, ce qui permet en particulier d'éviter des problèmes liés à la resolidification qui se posent habituellement avec d'autres techniques de soudage.

Cette technique présente en outre l'avantage de ne pas requérir d'apport de matière, et de ne pas entraîner d'émission de fumées polluantes.

De plus, la vitesse de déplacement du dispositif de soudage le long de l'interface de jonction des pièces à assembler peut atteindre 2 mètres par minute, de sorte que cette technique de soudage permet l'assemblage de pièces en peu de temps et à moindre coût.

Cette technique de soudage offre en outre des possibilités d'automatisation avancée.

Cependant, les procédés connus de soudage par friction malaxage présentent des inconvénients.

En effet, la contre-forme utilisée doit être réalisée avec des tolérances dimensionnelles strictes afin de pouvoir épouser au plus près la surface des pièces à assembler, dans le cas d'un soudage bord à bord, ou de l'une des pièces à assembler, dans le cas d'un soudage par transparence.

A défaut, ce sont les pièces à assembler qui doivent être préalablement calibrées, par exemple par usinage mécanique, pour s'adapter au mieux à la géométrie de la contre-forme.

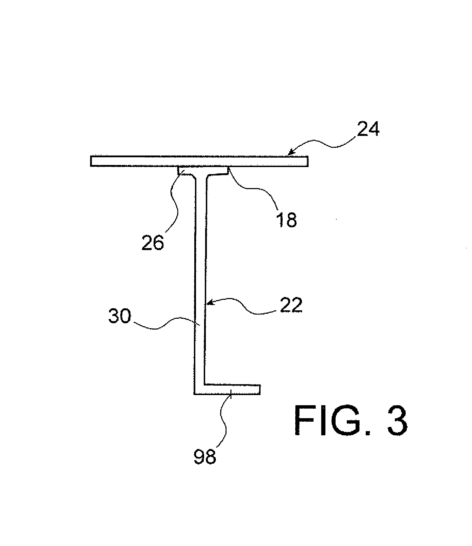

De plus, le niveau des efforts exercés par la tête de soudage peut atteindre plusieurs tonnes, de sorte que la contre-forme doit en général être une pièce massive, d'autant plus lorsque les pièces à assembler présentent une forme incurvée, comme par exemple dans le cas de l'assemblage d'un cadre circonférentiel 22 sur un panneau de fuselage d'avion 24 tel qu'illustré en coupe longitudinale sur la figure 3. Un tel cadre circonférentiel 22 comporte une semelle 26 de forme sensiblement cylindrique appliquée sur le panneau de fuselage 24, ainsi qu'une âme 30 s'étendant de manière sensiblement orthogonale à la semelle 26.

La contre-forme est en outre d'autant plus massive et complexe à réaliser qu'elle intègre un dispositif de refroidissement qui doit être capable d'évacuer une quantité importante de chaleur.

### EXPOSÉ DE L'INVENTION

L'invention a notamment pour but d'apporter une solution simple, économique et efficace à ces problèmes, permettant d'éviter au moins en partie les inconvénients précités.

L'invention propose à cet effet un système de soudage par friction malaxage pour le soudage d'au moins deux pièces à assembler, comprenant :
- une unité de soudage comprenant un dispositif de soudage comprenant au moins une tête de soudage pourvue d'un pion rotatif ;
- une unité de contre-appui présentant une surface d'appui destinée à supporter les pièces à assembler à l'encontre d'une pression exercée par chaque dite tête de soudage ; et dans lequel chaque dite tête de soudage est déplaçable par rapport à ladite surface d'appui de ladite unité de contre-appui, selon une première direction parallèle à un axe de rotation dudit pion rotatif de la tête de soudage, et chaque dite tête de soudage est déplaçable selon une deuxième direction orthogonale à l'axe de rotation du pion rotatif de ladite tête de soudage.

De plus, l'unité de contre-appui comprend des moyens de déplacement de ladite surface d'appui selon ladite deuxième direction.

De tels moyens de déplacement permettent de maintenir la surface d'appui sensiblement en vis-à-vis de la tête de soudage durant un déplacement de cette dernière dans ladite deuxième direction.

Cette deuxième direction peut en effet être une direction tangente à la trajectoire globalement suivie par ladite tête de soudage au cours de la mise en oeuvre d'un procédé de soudage au moyen du présent système, Pour cette raison, ladite deuxième direction sera dénommée « direction de soudage » dans ce qui suit.

Lorsque ladite tête de soudage, initialement à l'extérieur des pièces à assembler, est déplacée selon ladite première direction vers les pièces à assembler, le pion rotatif de cette tête de soudage peut pénétrer dans la matière formant lesdites pièces, comme cela apparaîtra plus clairement dans ce qui suit. Pour cette raison, ladite première direction sera parfois appelée « direction de pénétration » dans la suite de la présente description.

En proposant l'utilisation d'une surface d'appui déplaçable selon la direction de soudage, l'invention permet d'éviter le recours à une contre-forme massive du type habituellement utilisé, ce qui est notamment avantageux pour le soudage de pièces incurvées.

De plus, la possibilité de déplacements relatifs de la surface d'appui et de la tête de soudage selon ladite première direction permet d'assurer une contre-pression optimale à l'encontre de la pression exercée par la tête de soudage, tout en autorisant une réduction des exigences en matière de précision dimensionnelle de la surface d'appui et de calibration préalable des pièces à assembler.

Il est à noter que le système de soudage selon l'invention peut d'une manière générale être utilisé pour réaliser un soudage de type bord à bord ainsi qu'un soudage par transparence.

L'unité de contre-appui est de préférence conçue de manière à permettre un roulement de ladite surface d'appui sur l'une des pièces à assembler. Un tel roulement peut en effet se traduire par un déplacement global de la surface d'appui selon la direction de soudage.

Selon l'invention, l'unité de contre-appui comprend deux galets presseurs écartés l'un de l'autre et présentant un axe de révolution commun sensiblement orthogonal à ladite première direction et à ladite deuxième direction ou direction de soudage, chacun desdits galets presseurs présentant une piste circonférentielle principale formant au moins une partie de ladite surface d'appui.

Cette configuration est particulièrement avantageuse lorsque l'une des pièces à assembler est un raidisseur présentant une semelle et une âme, et lorsque le système de soudage est utilisé pour réaliser un soudage par transparence de la semelle du raidisseur sur une autre pièce, cette dernière prenant par exemple la forme d'un panneau.

En effet, les galets presseurs permettent d'assurer la fonction de surface d'appui à l'encontre de la pression exercée par ladite tête de soudage, tout en autorisant le passage de l'âme d'un tel raidisseur entre les galets presseurs.

Cette configuration est ainsi particulièrement avantageuse lorsque l'âme du raidisseur considéré est sensiblement centrée par rapport à la semelle du raidisseur.

D'une manière générale, de tels galets presseurs présentent notamment l'avantage de pouvoir intégrer un dispositif d'échange thermique de conception simple et peu coûteuse pour permettre un refroidissement efficace des pièces au cours de leur soudage.

En variante, un tel refroidissement peut être assuré par une projection de liquide de refroidissement sur la zone de soudage, par exemple au moyen d'un robot additionnel prévu à cet effet, ou encore par immersion de l'ensemble de l'installation de soudage dans un bassin rempli d'un liquide caloporteur, sans sortir du cadre de l'invention.

Il est à noter que ladite surface d'appui est de préférence intégralement formée par les pistes circonférentielles principales respectives desdits galets presseurs.

De plus, les galets presseurs sont avantageusement déplaçables en rotation autour de leur axe de révolution commun.

Les galets presseurs sont ainsi aptes à rouler sur l'une des pièces à assembler pour permettre le déplacement de ladite surface d'appui globalement selon ladite direction de soudage.

Dans ce cas, l'axe de révolution des galets presseurs constitue un axe de rotation de ceux-ci.

Dans le mode de réalisation préféré de l'invention, l'unité de contre-appui comprend des moyens pour solliciter les galets presseurs l'un en direction de l'autre.

Cette configuration permet ainsi notamment que les galets presseurs prennent en sandwich l'âme d'un raidisseur tout en appliquant leurs pistes circonférentielles principales respectives contre une semelle du raidisseur.

Cela permet notamment de faciliter le centrage d'un tel raidisseur au cours de son soudage sur une autre pièce.

Lesdits moyens pour solliciter les galets presseurs l'un en direction de l'autre comprennent par exemple deux bras de support portant respectivement lesdits galets presseurs.

Dans ce cas, pour permettre la sollicitation des galets presseurs l'un vers l'autre, l'unité de contre-appui comprend de préférence des moyens de déplacement desdits bras de support l'un en direction de l'autre.

Ces moyens de déplacement des bras de support peuvent par exemple être intégrés à un bras robotisé.

De plus, chaque galet presseur est avantageusement monté à rotation sur le bras de support correspondant.

Dans le mode de réalisation préféré de l'invention, chacun des galets presseurs présente un épaulement circonférentiel en saillie radialement vers l'extérieur, qui délimite une extrémité latérale de ladite piste circonférentielle principale du galet presseur d'un côté opposé à l'autre galet presseur.

Dans le cas d'un soudage par transparence des deux pièces à assembler, un tel épaulement circonférentiel peut contribuer au confinement et à la conformation de la matière formant une première desdites pièces, sur laquelle est appliquée la surface d'appui formée conjointement par les pistes circonférentielles principales respectives des galets presseurs.

La sollicitation de chaque galet presseur en direction de l'autre galet presseur peut en effet permettre l'application de l'épaulement du galet presseur contre le chant de ladite première pièce.

Dans le mode de réalisation préféré de l'invention, chacun desdits galets presseurs présente une piste circonférentielle secondaire raccordée à ladite piste circonférentielle principale dudit galet presseur par l'intermédiaire dudit épaulement circonférentiel du galet presseur.

Dans le cas d'un soudage par transparence des deux pièces à assembler, la piste circonférentielle secondaire de chaque galet presseur peut être avantageusement appliquée sur une deuxième desdites pièces, correspondant à la pièce disposée du côté du dispositif de soudage de l'unité de soudage.

Cette configuration permet de renforcer l'effet de confinement de la matière procuré par chaque galet presseur, comme cela apparaîtra plus clairement dans ce qui suit.

D'une manière générale, le système de soudage selon l'invention comprend en outre de préférence un dispositif de contrôle non destructif porté par l'unité de soudage et/ou un dispositif de contrôle non destructif porté par l'unité de contre-appui.

Un tel dispositif de contrôle non destructif permet un contrôle en ligne de la qualité du cordon de soudure, de manière rapide et automatique.

Dans ce cas, le système de soudage comprend en outre de préférence un dispositif de réparation porté par l'unité de soudage.

Le dispositif de contrôle non destructif est alors disposé entre le dispositif de soudage précité et le dispositif de réparation, eu égard à la direction de soudage.

Un tel dispositif de réparation comporte un second dispositif de soudage conçu pour reprendre localement le soudage des pièces à assembler lorsqu'un défaut du cordon de soudure préalablement réalisé à été détecté par le dispositif de contrôle non destructif.

Le dispositif de réparation permet d'éviter un retour en arrière de l'unité de soudage lorsqu'un défaut à été détecté, comme cela apparaîtra plus clairement dans ce qui suit.

Par ailleurs, le système de soudage comprend avantageusement un dispositif de traitement anticorrosion porté par l'unité de soudage et/ou un dispositif de traitement anticorrosion porté par l'unité de contre-appui.

Un tel dispositif de traitement anticorrosion permet l'application d'un traitement anticorrosion sur le cordon de soudure, le cas échéant après le contrôle de ce cordon de soudure et après la réparation éventuelle de ce dernier.

L'invention concerne également un procédé de soudage par friction malaxage (FSW) linéaire de deux pièces par transparence au moyen d'un système de soudage du type décrit ci-dessus, dans lequel:
- lesdites pièces sont superposées ;
- l'unité de contre-appui comprend deux galets presseurs écartés l'un de l'autre et présentant un axe de révolution commun orthogonal à ladite première direction et orthogonal à ladite deuxième direction ou direction de soudage, chacun desdits galets presseurs présentant une piste circonférentielle principale formant une partie au moins de ladite surface d'appui.
- le pion rotatif de chaque tête de soudage dudit dispositif de soudage est enfoncé au moins partiellement dans une première desdites pièces en passant intégralement au travers de la seconde pièce, puis ledit pion rotatif est déplacé, selon ladite deuxième direction, le long d'une interface de contact entre lesdites pièces, à la faveur d'un ramollissement local de la matière formant lesdites pièces provoqué par la chaleur induite par la friction dudit pion rotatif, de manière à former un cordon de soudure ;
- la surface d'appui de ladite unité de contre-appui est appliquée sur ladite première pièce et est déplacée sur cette dernière le long de ladite interface de contact de manière à contrer une pression exercée par le pion rotatif de chaque tête de soudage dudit dispositif de soudage, au cours du déplacement dudit pion rotatif selon ladite deuxième direction.

Ce procédé présente bien entendu les avantages du système décrit ci-dessus en termes de mobilité de la surface d'appui précitée et en termes de réduction des exigences en matière de précision dimensionnelle de la surface d'appui et de calibration préalable des pièces à assembler.

Le pion rotatif de chaque tête de soudage présente un axe de rotation localement orthogonal à l'interface de contact entre les pièces à assembler.

La première pièce précitée est par exemple la semelle d'un raidisseur, tandis que la seconde pièce précitée est par exemple un panneau, notamment pour aéronef, tel qu'un panneau de fuselage.

Comme expliqué ci-dessus, ladite surface d'appui est de préférence intégralement formée par les pistes circonférentielles principales respectives des galets presseurs.

De plus, ledit déplacement de ladite surface d'appui est de préférence réalisé au moyen d'un déplacement desdits galets presseurs le long de ladite interface de contact en opérant un roulement desdites pistes circonférentielles principales sur ladite première pièce moyennant une rotation de chacun des galets presseurs autour de son axe de révolution.

Préférentiellement, les galets presseurs sont sollicités l'un en direction de l'autre de sorte que deux joues respectives de ces galets presseurs prennent en sandwich une partie de ladite première pièce.

Les galets presseurs peuvent ainsi notamment prendre en sandwich l'âme d'un raidisseur au moyen de leurs joues respectives, tout en exerçant un appui sur la semelle du raidisseur au moyen de leurs pistes circonférentielles principales respectives, au cours du soudage de cette semelle sur un panneau.

Préférentiellement, les galets presseurs présentent chacun un épaulement circonférentiel appliqué contre un chant de ladite première pièce.

Cela permet de confiner la matière ramollie formant ladite première pièce et d'éviter ainsi que cette pièce ne se déforme sous la pression exercée par chaque tête de soudage et par ladite surface d'appui.

Dans le mode de réalisation préféré de l'invention, lesdits galets presseurs présentent chacun une piste circonférentielle secondaire raccordée à ladite piste circonférentielle principale du galet presseur par l'intermédiaire dudit épaulement circonférentiel de ce galet presseur.

La piste circonférentielle secondaire de chaque galet presseur est appliquée sur ladite seconde pièce et roule sur cette dernière au gré du déplacement du galet presseur le long de ladite interface de contact.

Cela permet d'optimiser l'étanchéité du confinement de la matière assuré par l'épaulement de chaque galet presseur.

Dans le mode de réalisation préféré de l'invention, ledit système de soudage comprend un dispositif de contrôle non destructif porté par l'unité de soudage et/ou un dispositif de contrôle non destructif porté par l'unité de contre-appui, et chaque dispositif de contrôle non destructif est déplacé de manière synchronisée et en retard par rapport à chaque tête de soudage dudit dispositif de soudage, de manière à opérer un contrôle non destructif dudit cordon de soudure.

Le contrôle de la qualité du cordon de soudure peut ainsi être intégré au procédé de soudage lui-même, et être ainsi opéré d'une manière automatique et rapide.

Le dispositif de contrôle non destructif est de préférence agencé entre ledit dispositif de soudage, dit « principal », et un second dispositif de soudage, dit « de réparation », porté par l'unité de soudage.

Dans ce cas, ledit second dispositif de soudage est maintenu inactif tant que le dispositif de contrôle non destructif ne révèle pas de défaut du cordon de soudure, et ledit second dispositif de soudage est activé lorsque le dispositif de contrôle non destructif détecte un défaut du cordon de soudure, de manière à reprendre localement le soudage desdites pièces.

Le second dispositif de soudage permet ainsi la réparation d'une zone défectueuse du cordon de soudure sans requérir de retour en arrière du dispositif de soudage principal ayant réalisé le cordon de soudure.

Ledit système de soudage comprend avantageusement un dispositif de traitement anticorrosion porté par l'unité de soudage et/ou un dispositif de traitement anticorrosion porté par l'unité de contre-appui.

Dans ce cas, chaque dispositif de traitement anticorrosion se déplace de préférence de manière synchronisée et en retard par rapport à chaque dispositif de soudage de l'unité de soudage, et le cas échant, en retard par rapport au dispositif de contrôle non destructif solidaire du même élément parmi l'unité de soudage et l'unité de contre-appui, de manière à appliquer un traitement anticorrosion au cordon de soudure.

Le cas échéant, ce traitement anticorrosion est ainsi appliqué après contrôle et réparation éventuelle du cordon de soudure.

D'une manière générale, il est à noter que le procédé selon l'invention peut réaliser simultanément un soudage bord et bord et par transparence. Autrement dit, ce procédé peut permettre le soudage bord à bord de deux pièces adjacentes conjointement au soudage d'une troisième pièce sur des parties d'extrémités adjacentes respectives des deux pièces adjacentes.

Dans une application particulièrement avantageuse du procédé selon l'invention, ladite première pièce est un raidisseur pour aéronef et ladite seconde pièce est un panneau pour aéronef, ou un ensemble de deux panneaux adjacents, sur lequel ledit raidisseur est soudé par transparence.

Un tel panneau peut être un panneau de fuselage et ledit raidisseur peut être un cadre circonférentiel ou un segment angulaire d'un tel cadre circonférentiel.

Dans ce cas, le déplacement de ladite surface d'appui s'effectue globalement selon une trajectoire incurvée.

La semelle d'un tel cadre circonférentiel présente par exemple une forme cylindrique de révolution, ou en portion de cylindre de révolution.

Dans ce cas, le déplacement de ladite surface d'appui s'effectue globalement selon une trajectoire circulaire, ou en arc de cercle, centrée sur un axe de fuselage défini par ledit panneau de fuselage.

Un panneau de fuselage pour aéronef présente une surface extérieure, définie comme étant la surface destinée à être située du côté extérieur de l'aéronef et à être ainsi baignée par le vent relatif s'écoulant le long du fuselage en vol, et une surface intérieure située du côté opposé. Le cadre circonférentiel précité est bien entendu soudé sur la surface intérieure du panneau de fuselage.

Dans le cas où le procédé concerne le soudage d'un tel cadre circonférentiel sur deux panneaux de fuselage adjacents, la jonction obtenue au terme du procédé est du type couramment appelée « jonction orbitale ».

En variante, ledit raidisseur peut être un raidisseur longitudinal, également dénommé lisse.

Dans ce cas, le déplacement de ladite surface d'appui peut s'effectuer selon une trajectoire sensiblement rectiligne, notamment lorsque le panneau de fuselage est destiné à un tronçon de fuselage situé entre la pointe avant et le cône arrière d'un aéronef.

En variante encore, le panneau peut être un panneau aérodynamique d'un élément de voilure d'aéronef tel qu'une aile ou un empennage d'avion.

Dans ce cas, le raidisseur considéré peut être un longeron ou une nervure d'un tel élément d'aéronef.

En variante encore, le panneau peut être un panneau faisant partie d'un plancher d'aéronef, auquel cas le raidisseur peut être une traverse supportant un tel plancher ou encore un rail pour le guidage de sièges devant être posés sur un tel plancher.

En variante encore, le panneau peut faire partie d'une case de train d'atterrissage d'aéronef, ou encore former le fond d'un réservoir dans un aéronef.

Dans l'ensemble de ces applications concernant un raidisseur et un panneau pour aéronef, il peut être particulièrement avantageux que ledit cordon de soudure s'étende en section depuis un premier bord latéral jusqu'à un second bord latéral opposé de ladite semelle du raidisseur.

Le procédé de soudage permet ainsi d'éviter l'apparition de microcavités entre la semelle du raidisseur et le panneau, et permet donc de réduire les risques de corrosion de ces pièces tout en optimisant la cohésion de l'assemblage obtenu à l'issue du procédé.

Dans ce cas, le procédé de soudage comprend de préférence l'utilisation d'un système de soudage qui comprend une pluralité de têtes de soudage comprenant chacune un pion rotatif ainsi qu'un épaulement s'étendant à la base du pion rotatif.

Préférentiellement, l'empreinte de l'ensemble des pions rotatifs respectifs desdites têtes de soudage s'étend en section sensiblement depuis le premier bord latéral jusqu'au second bord latéral de la semelle du raidisseur.

Par « sensiblement », il faut comprendre que l'empreinte s'étend jusqu'à une distance de chaque bord latéral de la semelle du raidisseur inférieure à 0,2 mm.

Par « empreinte », il faut comprendre la marque qui serait produite dans la matière par un enfoncement des pions rotatifs dans cette matière indépendamment de tout phénomène de malaxage induit par la rotation desdits pions.

Préférentiellement, chacun des pions rotatifs pénètre dans la semelle du raidisseur jusqu'à une profondeur distante de 0,2 mm à 0,5 mm de la surface de la semelle située du côté opposé aux têtes de soudage.

Cela permet de réduire le risque que les pions rotatifs entrent en contact avec ladite surface d'appui de l'unité de contre-appui.

Ladite pluralité de têtes de soudage comprend avantageusement trois têtes de soudage agencées selon une configuration triangulaire.

Une telle configuration des têtes de soudage est particulièrement bien adaptée à la formation de cordons de soudure couvrant toute la largeur des semelles des raidisseurs d'aéronef.

Dans ce cas, ladite pluralité de têtes de soudage comprend de préférence deux têtes de soudage latérales centrées par rapport à un même plan orthogonal à ladite deuxième direction ou direction de soudage, ainsi qu'une tête de soudage centrale décalée, selon ladite direction de soudage, par rapport à chacune desdites têtes de soudage latérales.

Préférentiellement, la projection, selon la direction de soudage, du pion rotatif de la tête de soudage centrale, intercepte les pions rotatifs respectifs des têtes de soudage latérales.

Cette caractéristique permet de garantir un certain recouvrement entre l'empreinte du pion rotatif de la tête de soudage centrale d'une part, et les empreintes respectives des pions rotatifs respectifs des têtes de soudage latérales d'autre part. Cela permet notamment d'optimiser l'homogénéité du cordon de soudure.

Préférentiellement, une première desdites têtes de soudage est positionnée en regard d'une âme du raidisseur tandis que les deux autres têtes de soudage sont décalées par rapport à ladite âme du raidisseur, et le pion rotatif de ladite première tête de soudage pénètre moins profondément dans ladite semelle du raidisseur que les pions rotatifs respectifs des deux autres têtes de soudage.

Cette configuration permet de réduire les risques de dégradation de parties structurelles critiques du raidisseur situées au voisinage de l'âme de ce dernier.

En particulier, ladite première tête de soudage peut être ladite tête de soudage centrale.

Cette configuration est particulièrement adaptée lorsque le raidisseur comporte une âme sensiblement centrée par rapport à la semelle de ce raidisseur.

Par ailleurs, lesdites têtes de soudage se déplacent avantageusement dans un sens tel que ladite tête de soudage centrale soit disposée en arrière desdites têtes de soudage latérales.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1, déjà décrite, est une vue schématique partielle en perspective de deux pièces en cours de soudage par une technique de friction malaxage bord à bord;
- la figure 2, déjà décrite, est une vue schématique en perspective de deux pièces en cours de soudage par une technique de friction malaxage bord à bord, illustrant également une contre-forme permettant le support des deux pièces ;
- la figure 3, déjà décrite, est une vue schématique en coupe longitudinale d'un cadre circonférentiel fixé sur un panneau de fuselage d'avion, au moyen d'une technique de soudage par friction malaxage de type connu ;
- la figure 4 est une vue schématique de côté d'une installation de soudage, selon un mode de réalisation préféré de l'invention, pour l'assemblage de cadres circonférentiels et de panneaux de fuselage d'avion ;
- la figure 5 est une vue schématique en coupe transversale, selon le plan V-V de la figure 4, de l'installation de soudage de la figure 4, illustrant un système de soudage appartenant à cette installation de soudage ;
- la figure 6 est une vue schématique partielle à plus grande échelle et en coupe longitudinale selon le plan VI-VI de la figure 5, du système de soudage de la figure 5 ;
- la figure 7 est une vue schématique à plus grande échelle d'une partie de la figure 5, en coupe selon le plan VII-VII de la figure 5 ;
- la figure 8 est une vue schématique partielle en perspective d'un panneau de fuselage d'aéronef et de deux cadres circonférentiels fixés sur celui-ci, illustrant le passage de têtes de soudage sur ce panneau ;
- la figure 9 est une vue schématique partielle de côté d'une installation de soudage comprenant un système de soudage selon un autre mode de réalisation de l'invention ;
- la figure 10 est une vue schématique partielle de côté d'une installation de soudage comprenant un système de soudage selon encore un autre mode de réalisation de l'invention.

Dans l'ensemble de ces figures, des références identiques peuvent désigner des éléments identiques ou analogues.

### EXPOSÉ DÉTAILLÉ DE MODES DE RÉALISATION PRÉFÉRÉS

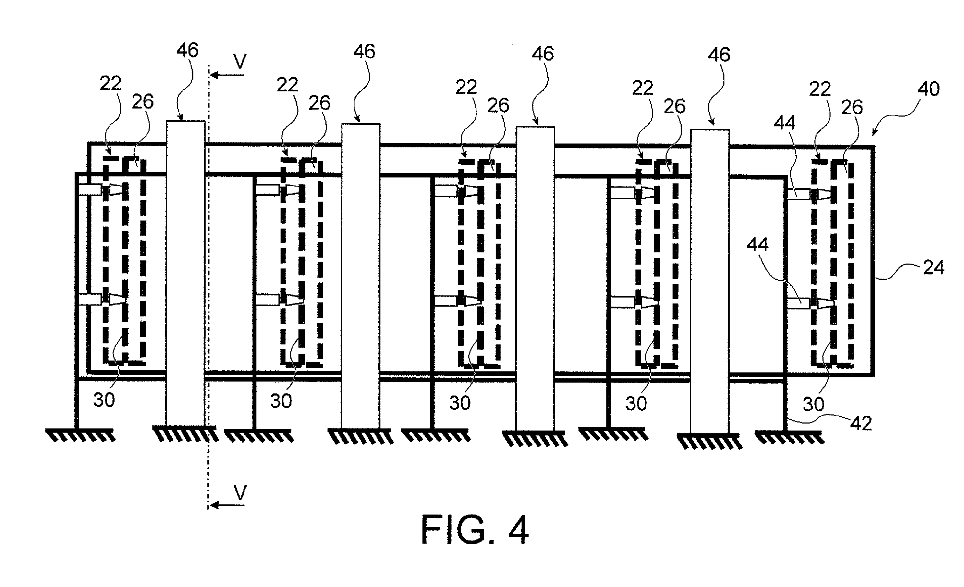

La figure 4 illustre de manière générale une installation de soudage par friction malaxage 40 destinée à la mise en oeuvre d'un procédé de soudage par friction malaxage par transparence pour l'assemblage de cadres circonférentiels sur des panneaux de fuselage d'avion, conformément à un mode de réalisation préféré de l'invention.

Cette figure 4 montre en particulier cinq cadres circonférentiels 22 qui sont chacun fixés sur un support 42, par exemple au moyen de deux pions de centrage 44 passant respectivement dans deux trous de centrage du cadre circonférentiel 22, ce dernier pouvant être retenu par exemple au moyen d'épingles coopérant avec les pions de centrage 44.

Une peau formée d'un panneau 24 de fuselage d'avion est appliquée sur la surface extérieure de la semelle 26 de chacun des cadres circonférentiels 22.

De plus, quatre systèmes de soudage 46 sont disposés côte-à-côte en regard du support 42 portant les cadres circonférentiels 22 et le panneau de fuselage 24. Pour des raisons de clarté, les quatre systèmes de soudage 46 sont représentés décalés longitudinalement par rapport aux cadres circonférentiels 22, mais lors du fonctionnement de cette installation de soudage 40, chacun des systèmes de soudage 46 est disposé sensiblement en regard d'un cadre circonférentiel 22 correspondant.

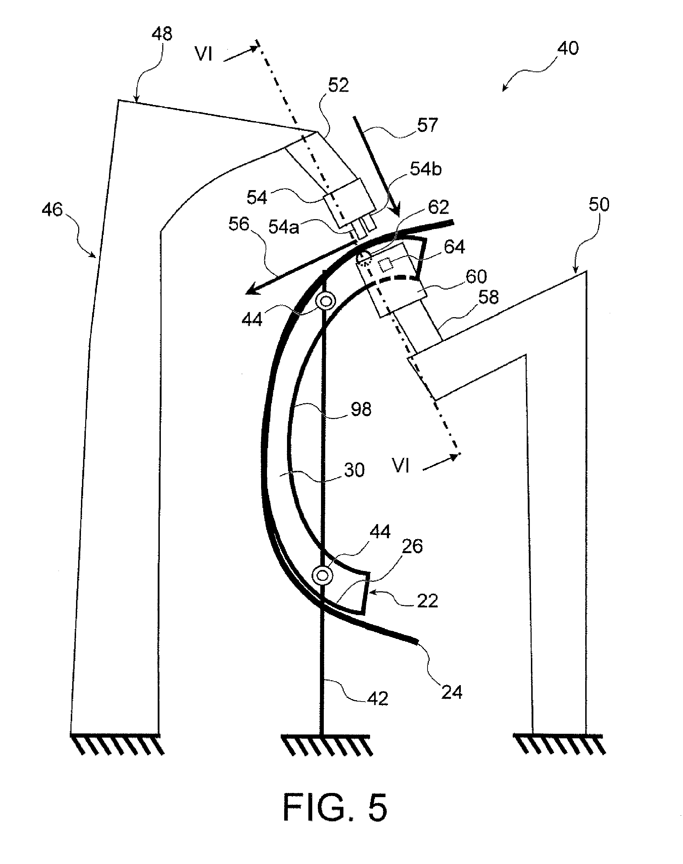

La figure 5 représente l'installatian de soudage 40 en coupe selon le plan V-V de la figure 4 et illustre ainsi l'un de ces systèmes de soudage 46 vu de côté.

Ce système de soudage 46 comporte globalement une unité de soudage 48 et une unité de contre-appui 50 disposées en regard l'une de l'autre, de part et d'autre du support 42 portant les cadres circonférentiels 22 et le panneau de fuselage 24.

L'unité de soudage 48 se présente sous la forme d'un robot comportant, à une extrémité d'un bras robotisé 52, un dispositif de soudage 54 pourvu d'une pluralité de têtes de soudage, comme cela apparaîtra plus clairement dans ce qui suit.

L'unité de soudage 48 est conçue de manière à permettre notamment un déplacement du dispositif de soudage 54 dans le plan de la figure 5, le long du cadre circonférentiel 22, selon une direction locale de soudage 56 tangente au panneau de fuselage 24.

L'unité de soudage 48 est en outre conçue de manière à permettre un déplacement du dispositif de soudage 54 dans une direction de pénétration de pions rotatifs respectifs des têtes de soudage de ce dispositif dans la matière formant le panneau de fuselage 24 et le cadre circonférentiel 22, comme cela apparaîtra plus clairement dans ce qui suit. Cette direction de pénétration est symbolisée par la flèche 57 et est parallèle à la droite formant l'intersection du plan de la figure 5 et du plan VI-VI visible sur cette figure 5. Par définition, cette direction de pénétration 57 est normale à la surface extérieure du panneau de fuselage 24 et est donc orthogonale à la direction de soudage 56 précitée.

L'unité de contre-appui 50 se présente également sous la forme d'un robot muni d'un bras robotisé 58. Ce dernier présente une extrémité munie de deux bras de support 60 disposés de part et d'autre de l'âme 30 du cadre circonférentiel 22, seul l'un de ces bras de support 60 étant visible sur la figure 5. Ces bras de support 60 portent chacun un galet presseur 62 ainsi qu'un galet de guidage 64, comme cela apparaîtra plus clairement dans ce qui suit.

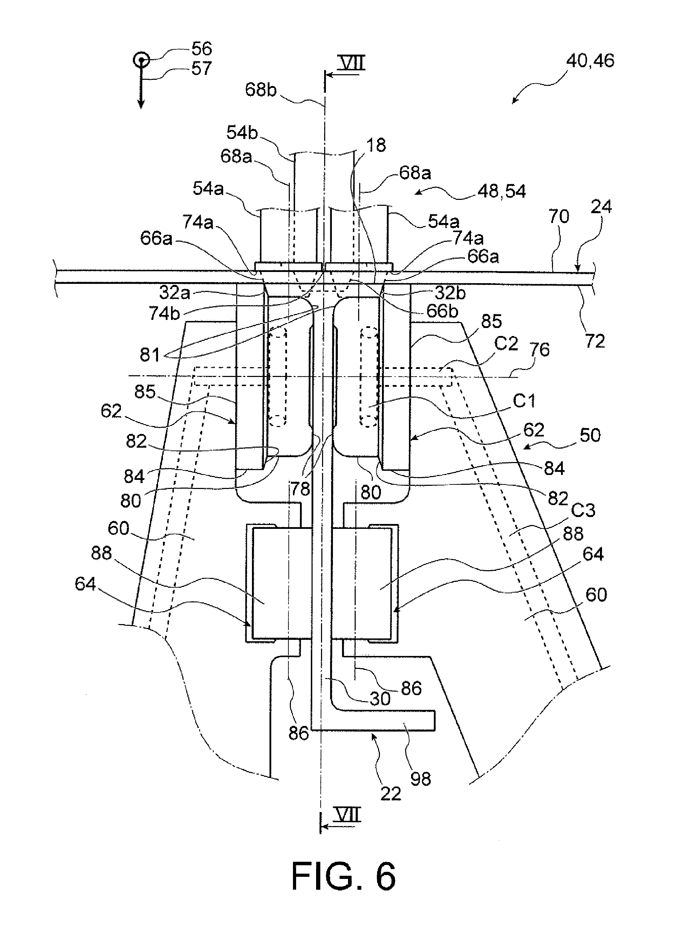

La figure 6 illustre plus en détail les principaux éléments permettant la mise en oeuvre du procédé de soudage par friction malaxage au moyen de l'installation de soudage 40.

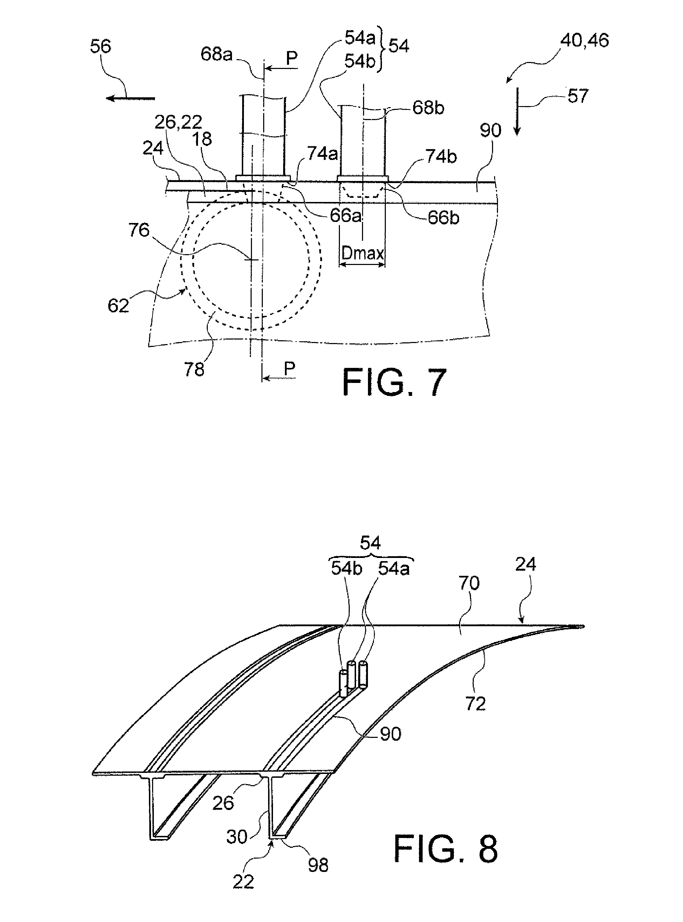

Comme le montre cette figure 6, le dispositif de soudage 54 comporte trois têtes de soudage disposées en triangle (figure 6). Ces têtes de soudage se répartissent en deux têtes de soudage latérales 54a et une tête de soudage centrale 54b, cette dernière étant décalée vers l'arrière par rapport aux têtes de soudage latérales 54a eu égard à la direction de soudage 56, comme cela apparaît plus clairement sur la figure 7.

Chacune des trois têtes de soudage 54a, 54b précitées comporte un pion rotatif 66a, 66b (figures 6 et 7), déplaçable en rotation selon un axe de rotation 68a, 68b sensiblement orthogonal à la direction de soudage 56 et donc aussi sensiblement normal aux surfaces extérieure 70 et intérieure 72 du panneau de fuselage 24. Chacune des trois têtes de soudage 54a, 54b comporte en outre un épaulement 74a, 74b formé à la base du pion rotatif 66a, 66b correspondant, Cet épaulement 74a, 74b peut être déplaçable en rotation dans un sens identique ou contraire au sens de rotation du pion rotatif 66a, 66b correspondant, ou encore être statique, d'une manière connue en soi. Chaque pion rotatif 66a, 66b présente une forme globalement tronconique, de sorte que la section de chaque pion rotatif se réduit en direction de l'extrémité libre du pion rotatif, c'est-à-dire du côté opposé à l'épaulement 74a, 74b correspondant. On définit le diamètre maximal Dmax (figure 7) de chaque pion rotatif comme étant le diamètre de la section du pion au niveau où ce dernier est le plus large, qui se trouve être à la base du pion rotatif à proximité de l'épaulement 74a, 74b correspondant.

Bien entendu, l'unité de soudage 48 intègre des moyens moteurs permettant l'entraînement en rotation des pions rotatifs 66a, 66b et, le cas échéant, l'entraînement en rotation des épaulements 74a, 74b.

Les épaulements 74a, 74b respectifs des têtes de soudage précitées s'étendent dans un même plan. Ces épaulements 74a, 74b peuvent ainsi être appliqués simultanément sur la surface extérieure 70 du panneau de fuselage 24, comme l'illustrent les figures 6 et 7.

Les pions rotatifs 66a respectifs des têtes de soudage latérales 54a présentent une hauteur légèrement inférieure à l'épaisseur cumulée du panneau de fuselage 24 et de la semelle 26 du cadre circonférentiel 22. La différence entre la hauteur de ces pions rotatifs 66a et l'épaisseur cumulée du panneau de fuselage 24 et de la semelle 26 est typiquement de l'ordre de quelques dixièmes de millimètre, de préférence comprise entre 0,2 mm et 0,5 mm. Par « hauteur » des pions rotatifs, il faut bien entendu comprendre leur étendue selon leur axe de rotation.

De plus, le pion rotatif 66b de la tête de soudage centrale 54b présente une hauteur inférieure à celle des pions rotatifs 66a respectifs des têtes de soudage latérales 54a, mais supérieure à l'épaisseur du panneau de fuselage 24. La différence de hauteur entre le pion rotatif 66b d'une part et les pions rotatifs 66a d'autre part est typiquement de l'ordre de quelques dixièmes de millimètre, et de préférence comprise entre 0,2 mm et 0,5 mm.

D'une manière générale, les trois pions rotatifs 66a, 66b sont agencés de sorte que la projection du pion rotatif 66b de la tête de soudage centrale 54b, perpendiculairement à un plan P (figure 7) passant par les axes de rotation 68a respectifs desdits pions rotatifs 66a respectifs des têtes de soudage latérales 54a, en direction de ces derniers, intercepte ces derniers pions rotatifs 66a (figure 6). De plus, la largeur de l'ensemble formé par les trois pions rotatifs 66a, 66b est sensiblement égale à la largeur de la semelle 26 du cadre circonférentiel 22. Cela permet de garantir que le cordon de soudure obtenu au moyen de l'unité de soudage soit en mesure de couvrir toute la largeur de la semelle 26 précitée, comme cela apparaîtra plus clairement dans ce qui suit.

La figure 6 montre en outre une partie d'extrémité de chacun des bras de support 60, qui comporte le galet presseur 62 et le galet de guidage 64 portés par le bras de support 60.

Chaque galet presseur 62 est monté à rotation sur le bras de support 60 correspondant, autour d'un axe de rotation 76 qui constitue également un axe de révolution géométrique du galet.

Les galets presseurs 62 présentent des joues 78 respectives destinées à être appliquées respectivement contre les deux côtés de l'âme 30 du cadre circonférentiel 22. De cette manière, l'âme 30 du cadre circonférentiel 22 peut être prise en sandwich entre les joues 78 respectives des galets presseurs 62 comme illustré sur la figure 6. A cet effet, le bras robotisé 58 de l'unité de contre-appui 50 comporte des moyens de manoeuvre des bras de support 60 capables de solliciter chaque bras de support 60 en direction de l'autre bras de support 60, et ainsi solliciter lesdits galets presseurs 62 l'un en direction de l'autre.

Chaque galet presseur 62 présente en outre une piste circonférentielle principale 80 de forme cylindrique de révolution autour de l'axe de rotation 76, s'étendant depuis la joue 78 du galet presseur 62, et destinée à être appliquée sur la surface intérieure de la semelle 26 du cadre circonférentiel 22, comme illustré sur la figure 6.

La joue 78 de chaque galet presseur 62 est raccordée à la piste circonférentielle principale 80 correspondante par une partie circonférentielle incurvée 81 apte à épouser la surface incurvée qui raccorde le côté correspondant de l'âme 30 du cadre circonférentiel 22 à la semelle 26 de celui-ci.

Les pistes circonférentielles principales 80 respectives des deux galets presseurs 62 forment conjointement une surface d'appui sur la semelle 26 du cadre circonférentiel 22, dans la terminologie propre à l'invention.

De plus, chaque galet presseur 62 présente un épaulement circonférentiel 82 définissant une extrémité de la piste circonférentielle principale 80 du galet presseur du côté opposé à la joue 78 de ce dernier. Cet épaulement circonférentiel 82 est raccordé à une piste circonférentielle secondaire 84 du galet presseur, s'étendant jusqu'à une face d'extrémité 85 de ce galet presseur 62 définie du côté opposé à la joue 78 de ce dernier. La piste circonférentielle secondaire 84 est destinée à être sensiblement au contact de la surface intérieure 72 du panneau de fuselage 24 comme illustré sur la figure 6. A cet effet, l'épaulement circonférentiel 82 de chaque galet presseur 62 présente une largeur sensiblement égale à l'épaisseur de la semelle 26 du cadre circonférentiel 22.

Il est à noter que les pistes circonférentielles principale 80 et secondaire 84 de chaque galet presseur peuvent être de forme cylindrique ou tronconique.

Les galets presseurs 62 intègrent en outre un dispositif de refroidissement. Chacun de ces galets presseurs comporte ainsi un canal sensiblement annulaire C1 centré sur l'axe de rotation 76 du galet presseur, et présentant une extrémité communiquant avec un canal d'entrée C2 et une extrémité opposée communiquant avec un canal de sortie (non visible sur la figure). Lesdits canaux d'entrée et de sortie débouchent sur la face d'extrémité 85 du galet presseur et sont raccordés respectivement à un conduit d'alimentation C3 et à un conduit de sortie (non visible sur la figure) qui sont ménagés dans le bras de support 60 correspondant et reliés à un échangeur thermique (non représenté) permettant le refroidissement du fluide caloporteur.

Par ailleurs, chaque galet de guidage 64 est monté à rotation autour d'un axe de rotation 86 respectif, qui est orthogonal à l'axe de rotation 76 du galet presseur 62 correspondant.

Chaque galet de guidage 64 présente une piste circonférentielle de guidage 88 de forme cylindrique de révolution autour de l'axe de rotation 86 du galet de guidage 64, et destinée à être appliquée sur une face correspondante de l'âme 30 du cadre circonférentiel 22.

Le procédé de soudage par friction malaxage d'un cadre circonférentiel 22 sur un panneau de fuselage 24, au moyen de l'un des systèmes de soudage 46 de l'installation de soudage 40, va maintenant être décrit plus en détail, en référence aux figures 5 à 8.

Ce procédé comporte dans un premier temps un pré-positionnement de l'unité de soudage 48 et de l'unité de contre-appui 50 du système de soudage 46 en regard d'un cadre circonférentiel 22. Au besoin, ce pré-positionnement peut être obtenu par un déplacement du système de soudage 46 de l'installation de soudage 40, et/ou par un déplacement du support 42 portant les cadres circonférentiels 22 et le panneau de fuselage 24.

Le procédé comporte ensuite un positionnement des pions rotatifs 66a, 66b respectifs des trois têtes de soudage 54a, 54b au droit de la semelle 26 du cadre circonférentiel 22. Compte-tenu de l'agencement des trois pions rotatifs 66a, 66b, la projection de l'ensemble formé par ces trois pions rotatifs, selon la direction de pénétration 57, intercepte alors sensiblement toute la largeur de ladite semelle 26. Ce positionnement peut être obtenu par une manoeuvre du bras robotisé 52 de l'unité de soudage 48.

Le procédé comporte ensuite une manoeuvre de l'unité de soudage 48, notamment du bras robotisé 52, de manière à amener les extrémités libres des pions rotatifs 66a, 66b au contact de la surface extérieure du panneau de fuselage 24.

Le procédé comporte aussi un positionnement de chaque galet presseur 62 de l'unité de contre-appui 50 de sorte que la joue 78 de chaque galet presseur 62 soit appliquée contre l'âme 30 du cadre circonférentiel 22 et de sorte que la piste circonférentielle principale 80 de chaque galet presseur 62 soit appliquée contre la semelle 26 du cadre circonférentiel 22. En particulier, chaque galet presseur 62 est positionné de sorte que son axe de rotation 76 soit localement parallèle au panneau de fuselage 24 et orthogonal aux directions de soudage 56 et de pénétration 57. Le positionnement des galets presseurs 62 peut être obtenu par une manoeuvre de l'unité de contre-appui 50, notamment du bras robotisé 58.

Dans cette position des galets presseurs 62, illustrée sur la figure 6, l'axe de rotation 76 de chaque galet presseur 62 est orthogonal à l'âme 30 du cadre circonférentiel 22 tandis que l'axe de rotation 86 de chaque galet de guidage 64 est parallèle à l'âme 30 précitée. De plus, l'épaulement circonférentiel 82 de chaque galet presseur 62 est appliqué contre le chant latéral de la semelle 26 du cadre circonférentiel 22 (figure 6), et la piste circonférentielle 88 de chaque galet de guidage 64 est appliquée contre l'âme 30 du cadre circonférentiel 22.

D'une manière générale, les galets presseurs 62 sont en outre positionnés en regard du dispositif de soudage 54. Dans l'exemple illustré, le positionnement des galets presseurs 62 est tel que chacun des galets presseurs 62 est intercepté par l'axe de rotation 68a du pion rotatif 66a de l'une des têtes de soudage latérales 54a (figures 6 et 7). Plus précisément, l'axe de révolution 76 de chacun des galets presseurs 62 est faiblement décalé vers l'avant par rapport l'axe de rotation 68a du pion rotatif 66a correspondant, d'une manière telle que la projection de cet axe de révolution 76 de chacun des galets presseurs 62 parallèlement à l'axe de rotation 68a dudit galet presseur intercepte tout de même ce dernier.

Le procédé comprend la mise en rotation des pions rotatifs 66a, 66b, et le cas échéant, la mise en rotation des épaulements 74a, 74b associés, puis l'enfoncement des pions rotatifs dans la matière formant le panneau de fuselage 24 puis également dans la matière formant la semelle 26 du cadre circonférentiel 22. Cet enfoncement est rendu possible par un ramollissement local de la matière induit par la friction des pions rotatifs, selon le principe bien connu du soudage par friction malaxage.

Le procédé comprend ensuite la manoeuvre de l'unité de soudage 48, notamment du bras robotisé 52, de sorte que les têtes de soudage 54a, 54b se déplacent le long du cadre circonférentiel 22, de préférence d'une manière telle que les pions rotatifs 66a, 66b parcourent l'intégralité de la semelle 26 de ce cadre circonférentiel 22.

Au cours du déplacement des têtes de soudage 54a, 54b, la rotation rapide des pions rotatifs 66a, 66b produit, autour de chacun de ces pions rotatifs, un malaxage de la matière localement ramollie qui forme le panneau de fuselage 24 ainsi que la semelle 26. Compte-tenu de l'agencement des trois pions rotatifs 66a, 66b, la région de matière malaxée s'étend d'un bord latéral 32a à l'autre 32b de ladite semelle 26. Dans l'exemple illustré, l'empreinte de l'ensemble des trois pions rotatifs 68a, 68b couvre en section l'intégralité de la semelle 26 précitée au cours du déplacement des têtes de soudage 54a, 54b. Il faut comprendre par là que cette empreinte s'étend d'un bord latéral 32a à l'autre 32b de la semelle 26. Par « empreinte », il faut comprendre la marque qui serait produite dans la matière par un enfoncement des pions rotatifs 66a, 66b indépendamment de tout phénomène de malaxage induit par la rotation desdits pions.

De plus, toujours au cours du déplacement des têtes de soudage 54a, 54b, du fait de la hauteur limitée du pion rotatif 66b de la tête de soudage centrale 54b comme expliqué ci-dessus, ce dernier pion rotatif 66b n'atteint pas les surfaces incurvées du cadre circonférentiel 22 qui sont respectivement au contact des parties circonférentielles incurvées 81 respectives des galets presseurs 62, et qui raccordent respectivement les faces de l'âme 30 du cadre circonférentiel 22 à la semelle 26 de celui-ci. L'intégrité de ces surfaces incurvées du cadre circonférentiel 22 peut ainsi être préservée.

En outre, les pions rotatifs 66a respectifs des têtes de soudage latérales 54a n'atteignent pas les pistes circonférentielles principales 80 respectives des galets presseurs 62, du fait de la hauteur limitée de ces pions rotatifs 66a, comme expliqué ci-dessus.

Dans le même temps, l'unité de contre-appui 50 est manoeuvrée de manière à produire un roulement des galets presseurs 62 sur la surface intérieure de la semelle 26 du cadre circonférentiel 22 et sur la surface intérieure 72 du panneau de fuselage 24, de manière synchronisée avec le déplacement du dispositif de soudage 54, de sorte que les galets presseurs 62 exercent en permanence un appui sensiblement opposé à la pression exercée par l'ensemble des pions rotatifs 66a, 66b respectifs des têtes de soudage 54a, 54b, comme illustré par la figure 7.

Les galets presseurs 62 participent en outre au confinement et à la conformation de la matière ramollie en épousant la section de la semelle 26 du cadre circonférentiel 22. L'épaulement circonférentiel 82 de chacun des galets presseurs 62 permet en particulier de retenir la matière de chaque côté de ladite semelle 26.

Conjointement au déplacement des galets presseurs 62, les galets de guidage 64 roulent respectivement sur les deux faces de l'âme 30 du cadre circonférentiel 22 et contribuent ainsi au centrage de ce cadre circonférentiel 22 par rapport au panneau de fuselage 24.

Au terme du procédé de soudage, après refroidissement, la matière précédemment malaxée retrouve sa rigidité et forme un cordon de soudure 90 (figure 8) assurant une parfaite cohésion entre la semelle 26 du cadre circonférentiel 22 et le panneau de fuselage 24. Ce cordon de soudure 90 correspond à la région de matière précédemment malaxée et couvre donc toute la largeur de la semelle 26 du cadre circonférentiel 22.

Le procédé décrit ci-dessus correspond au travail de l'un des systèmes de soudage 46 de l'installation 40. Bien entendu, les autres systèmes de soudage 46 peuvent mettre en oeuvre le même procédé en parallèle.

Il est à noter que le procédé décrit ci-dessus peut également être appliqué au soudage d'un cadre circonférentiel conjointement sur deux panneaux de fuselage adjacents. Dans ce cas, le procédé réalise conjointement un soudage bord à bord des deux panneaux adjacents et un soudage par transparence du cadre circonférentiel sur les extrémités adjacentes desdits panneaux.

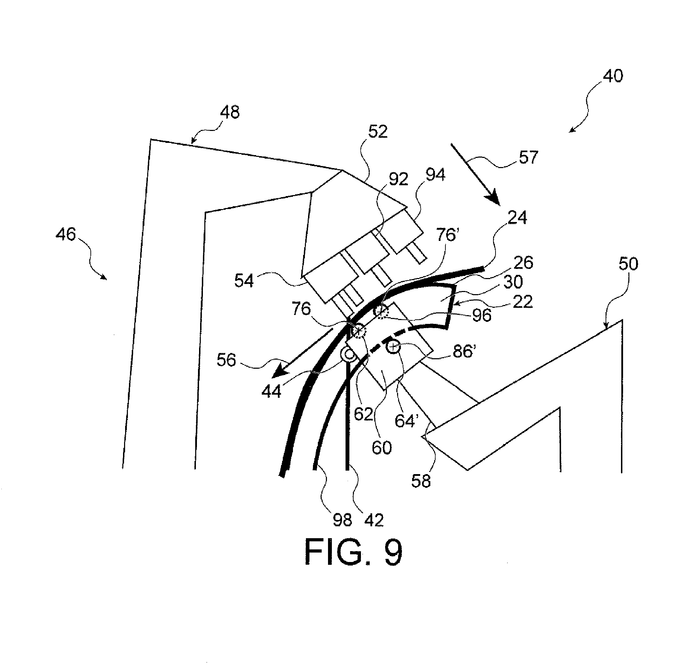

La figure 9 illustre un système de soudage 46 selon un autre mode de réalisation de l'invention, dans lequel l'unité de soudage 48 comporte en outre un dispositif de contrôle non destructif 92 ainsi qu'un dispositif de traitement anticorrosion 94 qui sont portés par le bras robotisé 52, et qui peuvent être chacun d'un type conventionnel. Le dispositif de contrôle non destructif 92 est par exemple un dispositif de contrôle par ultrasons.

Au cours de la mise en oeuvre du procédé de soudage, l'unité de soudage est positionnée de sorte que le dispositif de contrôle non destructif 92 soit disposé en retard, c'est-à-dire en arrière, par rapport au dispositif de soudage 54, et de sorte que le dispositif de traitement anticorrosion 94 soit disposé en retard, c'est-à-dire en arrière, par rapport au dispositif de contrôle non destructif 92, eu égard à la direction de soudage 56.

De cette manière, le dispositif de contrôle non destructif 92 permet de contrôler la qualité du cordon de soudure 90 immédiatement après sa formation, de manière automatique.

En cas de détection d'un défaut, le procédé de soudage comprend alors un retour en arrière du dispositif de soudage 54 puis une reprise du soudage à partir de la zone défectueuse du cordon de soudure 90.

De plus, le dispositif de traitement anticorrosion 94 permet l'application d'un traitement anticorrosion sur la surface extérieure du panneau de fuselage 24, au niveau du cordon de soudure 90, immédiatement après le contrôle de la qualité de ce dernier lorsque ce contrôle n'a pas révélé de défaut.

En variante ou de manière complémentaire, un dispositif de contrôle non destructif et/ou un dispositif anticorrosion peut équiper le bras robotisé 58 de l'unité de contre-appui 50 afin d'agir sur la semelle 26 du cadre circonférentiel 22.

De plus, l'exemple de la figure 9 illustre une autre configuration de galets presseurs et de galets de guidage.

En effet, l'unité de contre-appui 50 de la figure 9 comporte non seulement les deux galets presseurs 62 décrits ci-dessus mais également deux galets presseurs additionnels 96 disposés en arrière des galets presseurs 62 eu égard à la direction de soudage 56 et semblables à ceux-ci. Ces galets presseurs additionnels 96 sont également appliqués sur la surface intérieure de la semelle 26 du cadre circonférentiel 22.

L'unité de contre-appui 50 comporte deux galets de guidage 64' dont les axes de rotation 86' sont parallèles aux axes de rotation 76 et 76' respectifs des galets presseurs 62 et 96. Ces galets de guidage 64' sont appliqués sur la surface intérieure du talon 98 du cadre circonférentiel 22. Il est à noter que ce talon 98 peut être aperçu plus clairement sur les figures 6 et 8.

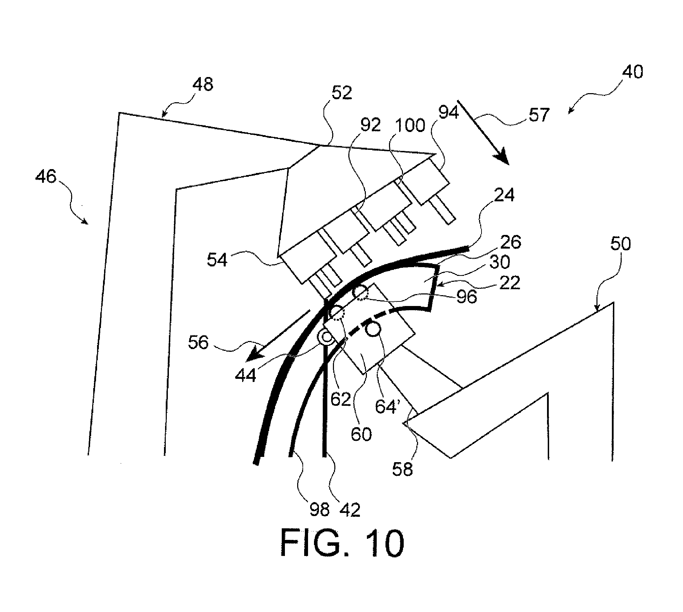

Par ailleurs, dans un autre mode de réalisation de l'invention illustré sur la figure 10, l'unité de soudage 48 comporte en outre un dispositif de réparation formé d'un second dispositif de soudage 100, de préférence semblable au dispositif de soudage 54 décrit ci-dessus, mais agencé entre le dispositif de contrôle non destructif 92 et le dispositif de traitement anticorrosion 94.

Ce second dispositif de soudage 100 est maintenu inactif tant que le dispositif de contrôle non destructif 92 ne détecte aucun défaut, et est activé suite à la détection éventuelle d'un défaut. Dans ce cas, le procédé comprend alors la reprise du soudage dans la zone défectueuse du cordon de soudure 90 au moyen du second dispositif de soudage 100. Au terme de cette reprise de la zone défectueuse, le procédé se poursuit normalement au moyen du dispositif de soudage 54.

Le second dispositif de soudage 100 permet ainsi d'éviter tout retour en arrière du dispositif de soudage 54 en cas de détection d'un défaut du cordon de soudure 90 au moyen du dispositif de contrôle non destructif 92, ce qui permet de rendre encore plus rapide le procédé de soudage.

Dans la description qui précède, un exemple de procédé de soudage selon l'invention et d'installation permettant la mise en oeuvre de ce procédé ont été décrits en ce qui concerne le soudage d'un cadre circonférentiel sur un panneau de fuselage d'avion.

Il est à noter que l'invention peut être appliquée au soudage d'autres pièces, notamment au soudage de raidisseurs longitudinaux, longerons ou traverses.

## Revendications

1. Système (46) de soudage par friction malaxage pour le soudage d'au moins deux pièces (22, 24) à assembler, comprenant :
- une unité de soudage (48) comprenant un dispositif de soudage (54) comprenant au moins une tête de soudage (54a, 54b) pourvue d'un pion rotatif (66a, 66b) ;
- une unité de contre-appui (50) présentant une surface d'appui (80) destinée à supporter les pièces à assembler (22, 24) à l'encontre d'une pression exercée par chaque dite tête de soudage (54a, 54b) ;
et dans lequel:
- ladite tête de soudage (54a, 54b) est déplaçable par rapport à ladite surface d'appui (80) de ladite unité de contre-appui (50), selon une première direction (57) parallèle à un axe de rotation (68a, 68b) dudit pion rotatif (66a, 66b) de chaque dite tête de soudage ;
- chaque dite tête de soudage (54a, 54b) est déplaçable selon une deuxième direction (56) orthogonale audit axe de rotation (68a, 68b) dudit pion rotatif (66a, 66b) de ladite tête de soudage ;
- ladite unité de contre-appui (50) comprend des moyens de déplacement de ladite surface d'appui (80) selon ladite deuxième direction (56) ;
ledit dispositif étant **caractérisé en ce que** ladite unité de contre-appui (50) comprend deux galets presseurs (62) écartés l'un de l'autre et présentant un axe de révolution commun (76) sensiblement orthogonal à ladite première direction (57) et orthogonal à ladite deuxième direction (56), chacun desdits galets presseurs (62) présentant une piste circonférentielle principale (80) formant au moins une partie de ladite surface d'appui.

2. Système de soudage selon la revendication 1, dans lequel ladite unité de contre-appui (50) comprend des moyens (58, 60) pour solliciter lesdits galets presseurs (62) l'un en direction de l'autre.

3. Système de soudage selon la revendication 2, dans lequel chacun desdits galets presseurs (62) présente un épaulement circonférentiel (82) en saillie radialement vers l'extérieur qui délimite une extrémité latérale de ladite piste circonférentielle principale (80) dudit galet presseur du côté opposé à l'autre galet presseur.

4. Système de soudage selon la revendication 3, dans lequel chacun desdits galets presseurs (62) présente une piste circonférentielle secondaire (84) raccordée à ladite piste circonférentielle principale (80) dudit galet presseur par l'intermédiaire dudit épaulement circonférentiel (82) dudit galet presseur.

5. Procédé de soudage par friction malaxage (FSW) linéaire de deux pièces (22, 24) par transparence au moyen du système de soudage (46) selon l'une quelconque des revendications précédentes, dans lequel ;
- lesdites pièces (22, 26, 24) sont superposées ;
- le pion rotatif (66a, 66b) de chaque tête de soudage (54a, 54b) dudit dispositif de soudage (54) est enfoncé au moins partiellement dans une première (22, 26) desdites pièces en passant intégralement au travers de la seconde pièce (24), puis ledit pion rotatif est déplacé, selon ladite deuxième direction (56), le long d'une interface (18) de contact entre lesdites pièces, à la faveur d'un ramollissement local de la matière formant lesdites pièces provoqué par la chaleur induite par la friction dudit pion rotatif, de manière à former un cordon de soudure (90) ;
- ladite surface d'appui (80) de ladite unité de contre-appui (50) est appliquée sur ladite première pièce (22, 26) et est déplacée sur cette dernière le long de ladite interface de contact (18) de manière à contrer une pression exercée par le pion rotatif (66a, 66b) de chaque tête de soudage (54a, 54b) dudit dispositif de soudage (54), au cours du déplacement dudit pion rotatif selon ladite deuxième direction (56).

6. Procédé selon la revendication 5, dans lequel ledit déplacement de ladite surface d'appui est réalisé au moyen d'un déplacement desdits galets presseurs (62) le long de ladite interface de contact (18) en opérant un roulement desdites pistes circonférentielles principales (80) sur ladite première pièce (22, 26) moyennant une rotation de chacun desdits galets presseurs (62) autour de son axe de révolution (76).

7. Procédé selon la revendication 6, dans lequel :
- lesdits galets presseurs (62) présentent chacun un épaulement circonférentiel (82) appliqué contre un chant de ladite première pièce (22, 26) ;
- lesdits galets presseurs (62) présentent chacun une piste circonférentielle secondaire (84) raccordée à ladite piste circonférentielle principale (80) du galet presseur (62) par l'intermédiaire dudit épaulement circonférentiel (82) du galet presseur ;
- ladite piste circonférentielle secondaire (84) de chaque galet presseur (62) est appliquée sur ladite seconde pièce (24) et roule sur cette dernière au gré du déplacement du galet presseur (62) le long de ladite interface de contact (18).

8. Procédé selon l'une quelconque des revendications 5 à 7, dans lequel lesdits galets presseurs (62) sont sollicités l'un en direction de l'autre de sorte que deux joues (78) respectives desdits galets presseurs (62) prennent en sandwich une partie (30) de ladite première pièce (22).

9. Procédé selon l'une quelconque des revendications 5 à 8, dans lequel :
- ledit système de soudage (46) comprend un dispositif de contrôle non destructif (92) porté par ladite unité de soudage (48) et/ou un dispositif de contrôle non destructif porté par ladite unité de contre-appui (50) ;
- chaque dispositif de contrôle non destructif (92) est déplacé de manière synchronisée et en retard par rapport à chaque tête de soudage (54a, 54b) dudit dispositif de soudage (54), de manière à opérer un contrôle non destructif dudit cordon de soudure (90).

10. Procédé selon la revendication 9, dans lequel :
- ledit dispositif de contrôle non destructif (92) est agencé entre ledit dispositif de soudage (54) et un second dispositif de soudage (100) porté par ladite unité de soudage (48) ;
- ledit second dispositif de soudage (100) est maintenu inactif tant que ledit dispositif de contrôle non destructif (92) ne révèle pas de défaut dudit cordon de soudure (90) ;
- ledit second dispositif de soudage (100) est activé lorsque ledit dispositif de contrôle non destructif (92) détecte un défaut dudit cordon de soudure (90), de manière à reprendre localement le soudage desdites pièces (22, 24).

11. Procédé selon l'une quelconque des revendications 5 à 10, dans lequel :
- ledit système de soudage (46) comprend un dispositif de traitement anticorrosion (94) porté par ladite unité de soudage (48) et/ou un dispositif de traitement anticorrosion porté par ladite unité de contre-appui (50) ;
- chaque dispositif de traitement anticorrosion (94) se déplace de manière synchronisée et en retard par rapport à chaque dispositif de soudage (54, 100) de ladite unité de soudage (48), et le cas échant, en retard par rapport au dispositif de contrôle non destructif (92) solidaire du même élément parmi l'unité de soudage (48) et l'unité de contre-appui (50), de manière à appliquer un traitement anticorrosion audit cordon de soudure (90).

12. Procédé selon l'une quelconque des revendications 5 à 11, dans lequel ladite première pièce est un raidisseur (22) pour aéronef et ladite seconde pièce est un panneau (24) pour aéronef.
